Europäisches Patentamt

European Patent Office

Office européen des brevets

(11) Publication number: **0 341 644**
**A1**

(12) # EUROPEAN PATENT APPLICATION

(21) Application number: 89108272.9

(22) Date of filing: 09.05.89

(51) Int. Cl.⁴: **H01B 3/44 , C08L 23/08 ,**
**//C08F210:16**

(30) Priority: 10.05.88 US 192676

(43) Date of publication of application:
15.11.89 Bulletin 89/46

(84) Designated Contracting States:
AT BE CH DE ES FR GB GR IT LI LU NL SE

(71) Applicant: UNION CARBIDE CORPORATION
39 Old Ridgebury Road
Danbury Connecticut 06817(US)

(72) Inventor: Turbett, Robert John
1738 Long Hill Road
Millington New Jersey 07946(US)
Inventor: Barnabeo, Austin Emidio
533 Spring Valley Drive
Bridgewater New Jersey 08807(US)
Inventor: Marsden, Eric Paul
104 Mine Street
Flemington New Jersey 08822(US)
Inventor: Umpleby, Jeffrey David
144 Library Place
Princeton New Jersey 08540(US)
Inventor: Mendelsohn, Alfred
1467 East 13th St.
Brooklyn New York 11230(US)

(74) Representative: Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)

(54) Tree resistant compositions.

(57) A water tree resistant composition comprising:
(a) a copolymer of at least the two comonomers, ethylene and 1-butene, said copolymer having a density no greater than about 0.905 gram per cubic centimeter; or
(b) a copolymer of at least the two comonomers, ethylene and 1-hexene, said copolymer having a density no greater than about 0.920 gram per cubic centimeter; or
(c) the copolymer of (a) or (b) grafted with a hydrolyzable vinyl silane,
the copolymers of (a) and (b) being produced by contacting the relevant comonomers, under polymerization conditions, with (i) a catalyst system containing a catalyst precursor comprising magnesium, titanium, a halogen, and an electron donor, and a hydrocarbyl aluminum cocatalyst or (ii) a catalyst system containing a catalyst precursor comprising vanadium, an electron donor, and a hydrocarbyl aluminum halide; a hydrocarbyl aluminum cocatalyst; and a halogen substituted lower alkane promoter.

EP 0 341 644 A1

# TREE RESISTANT COMPOSITIONS

This invention relates to compositions which are useful in low to high voltage insulation because of their resistance to water trees.

Power cables insulated with extruded dielectrics are known to suffer from shortened life when installed underground where water contact is likely. The shortened life has been attributed to the formation of water trees, which occur when an organic polymeric material is subjected to an electrical field over a long period of time in the presence of water in liquid or vapor form. The net result is a reduction in the dielectric strength of the insulation.

Many solutions have been proposed for increasing the resistance of organic insulating materials to degradation by water treeing. These include, for example, the addition to polyethylene of (i) a polar copolymer such as a copolymer of ethylene and vinyl acetate; (ii) a voltage stabilizer such as dodecanol; and (iii) a filler, e.g., clay. These solutions all have shortcomings of some kind such as an increase in dielectric loss, i.e., the power factor, volatility, or cost.

An object of this invention, therefore, is to provide a water tree resistant composition adapted for use in low to high voltage insulation, which does not depend on the use of modifying additives such as polar copolymers, voltage stabilizers, or fillers to achieve treeing resistance, and which will take advantage of the desirable electrical characteristics of "pure" polyethylene, for example, its low dissipation factor.

According to the present invention, the above object is met by a water tree resistant composition comprising:

(a) a copolymer of at least the two comonomers, ethylene and 1-butene, said copolymer having a density no greater than about 0.905 gram per cubic centimeter; or

(b) a copolymer of at least the two comonomers, ethylene and 1-hexene, said copolymer having a density no greater than about 0.920 gram per cubic centimeter; or

(c) the copolymer of (a) or (b) grafted with a hydrolyzable vinyl silane prior to cross-linking; or

(d) a mixture of any of the copolymers defined in paragraphs (a), (b), and (c) in any proportions,

said copolymers being provided by contacting the relevant comonomers, under polymerization conditions, with (i) a catalyst system containing a catalyst precursor comprising magnesium, titanium, a halogen, and an electron donor together with one or more aluminum containing compounds, or (ii) a catalyst system containing a catalyst precursor comprising vanadium, halogen, and an electron donor; one or more aluminum containing compounds; and, optionally, a lower haloalkane compound.

In this specification, the term "copolymer" is considered to mean a polymer based on two or more comonomers. Either of the above-mentioned copolymers. i.e., the ethylene/1-butene copolymer and the ethylene/1-hexene copolymer, can include additional comonomers such as alpha-olefins having 3 to 12 carbon atoms or dienes. The dienes can be conjugated or non-conjugated dienes containing 5 to 25 carbon atoms such as 1,4-pentadiene, 1,4-hexadiene, 1,5-hexadiene, dicyclopentadiene, 4-vinyl cyclohexene, 1-vinyl-1- cyclopentene, and the alkylbicyclononadienes, indenes, and norbornenes. Ethylidene norbornene is an example of the latter. The non-conjugated dienes are preferred.

The ethylene/1-butene or 1-hexene copolymers can be advantageously blended with (i) polyethylenes having densities in the range of about 0.91 to 0.93 prepared by conventional high pressure techniques; (ii) ethylene copolymers wherein at least one comonomer is a vinyl acid, a vinyl acid ester, a vinyl ester of an organic acid, or a derivative thereof; (iii) ethylene terpolymers based on at least two comonomers referred to in items (ii) and (viii); (iv) ethylene terpolymers based on alpha-olefins having 3 to 8 carbon atoms; (v) ethylene/propylene rubbers; (vi) ethylene/propylene/diene monomer rubbers; (vii) hydrolyzable graft polymers produced by grafting silane to any of items (i) to (vi); or (viii) ethylene/hydrolyzable silane copolymers. The high pressure technique referred to in (i) is described in Introduction to Polymer Chemistry, Stille, Wiley and Sons, New York, 1982, at pages 149 to 153. The ethylene/silane copolymer can be prepared by the process described in United States patent 3,225,018 and the terpolymer by the process described in United States patent 4,291,136. The item (i) high pressure polymers which are blended with the base ethylene/alpha-olefin copolymer are preferably blended to provide an average density for the blend of no higher than about 0.905 gram per cubic centimeter where the ethylene/1-butene copolymer is the base copolymer and preferably below about 0.920 gram per cubic centimeter where the ethylene/1-hexene copolymer is the base copolymer. The weight ratio of base copolymer to added copolymer is usually in the range of about 3:1 to about 1:3. If polar copolymers such as ethylene/vinyl acetate or ethylene/ethyl acrylate are used in the blend, the concentration of the polar comonomer should be kept at low levels to avoid high dielectric losses, e.g., less than about 10 percent by weight of the blend.

The ethylene/1-butene or 1-hexene copolymers are produced using either a titanium or a vanadium based catalyst system.

With respect to the titanium based catalyst system, the respective comonomers are contacted with a catalyst system containing a catalyst precursor comprising magnesium, titanium, a halogen, and an electron donor as well as one or more aluminum containing compounds such as triethylaluminum and triisobutylaluminum. The catalyst system and the preparation of the copolymer are described in United States patent 4,302,565 issued on March 24, 1981.

The copolymer produced in the presence of the titanium based catalyst system is typically prepared as follows: Into a flask equipped with a mechanical stirrer are placed anhydrous $MgCl_2$ and tetrahydrofuran (THF). To this mixture, $TiCl_4$ is added. Porous dehydrated silica is added to the solution and stirred. The mixture is dried to provide a dry, free-flowing powder having the particle size of the silica. The desired weight of impregnated precursor composition and activator compound. e.g., triethylaluminum, is added to a mixing tank with a sufficient amount of anhydrous aliphatic hydrocarbon diluent such as isopentane to provide a slurry system. The activator compound and precursor compound are used in such amounts as to provide a partially activated precursor composition which has an Al/Ti ratio of up to 10:1. The contents of the slurry system are then mixed and dried. The resulting catalyst is in the form of a partially activated precursor composition which is impregnated within the pores of the silica. It is injected into, and fully activated within, the polymerization reactor. Activator compound is added to the polymerization reactor so as to maintain the Al/Ti ratio in the reactor at a level of about 10:1 to 400:1. Ethylene is then copolymerized with 1-butene, preferably, in the gas phase in a fluidized bed. The reaction is conducted, after equilibrium is reached, for 1 hour at 85° C and under a pressure of 300 psig, a gas velocity of about 3 to 6 times Gmf, and a space time yield of about 4.4 to 6.3 in a fluid bed reactor system.

With regard to the vanadium based catalyst system, the respective comonomers are preferably contacted with a supported catalyst system containing a catalyst precursor comprising a vanadium trihalide, an electron donor, and a hydrocarbyl aluminum halide together with a hydrocarbyl aluminum cocatalyst and a halogen substituted lower alkane promoter, the lower alkane promoter having 1 to 7 carbon atoms. The catalyst system and a process for preparing the copolymer are described in European Patent Application 0 120 501 published on October 3, 1984.

The copolymer produced in the presence of the vanadium based catalyst is typically prepared as follows: To a flask containing anhydrous tetrahydrofuran is added $VCl_3$. The mixture is stirred until the $VCl_3$ is dissolved. To this solution is added dehydrated silica and stirring is continued. The flask is vented and the solution is dried to the mud stage. The impregnated silica is a free-flowing solid which has 0.25 millimole of vanadium per gram. The solid is removed from the flask and stored under nitrogen. Then, the modifier is introduced using the following procedure. To a flask containing anhydrous isopentane is added the impregnated silica described above. To this mixture is added, with stirring, diethylaluminum chloride, as modifier, in anhydrous hexane. The amount of modifier is employed in an amount sufficient to provide 1.7 mole of modifier per mole of tetrahydrofuran. This mixture is heated until the product is a free-flowing powder. The vanadium precursor is then removed from the flask and stored under nitrogen. Polyethylene is produced in a fluidized bed reactor under the following operating conditions: promoter/cocatalyst molar ratio: 1.0; aluminum/ vanadium atomic ratio: 40; temperature: 70° C; gas velocity: 1.5 feet per second; nitrogen pressure (mole percent): 50; comonomer/ethylene molar ratio: 0.24; hydrogen/ethylene molar ratio: 0.007; and pounds/hour-cubic feet: 4.7. Trisobutylaluminum cocatalyst is added during polymerization. Chloroform, $CHCl_3$, is added as the promoter as a 5 weight percent solution in isopentane. The polymerization is conducted for more than one hour after equilibrium is reached under a pressure of about 300 psig.

The portion of the copolymer attributed to 1-butene or 1-hexene, in the case where the comonomers are the primary comonomers along with ethylene, is in the range of about 5 to about 50 percent by weight based on the weight of the copolymer and is preferably in the range of about 15 to about 40 percent by weight. The portion of the copolymer based on ethylene is greater than about 50 percent by weight and is preferably more than 60 percent by weight. Where additional comonomers are used, the portion based on these comonomers is in the range of about 1 to about 15 percent by weight.

The density of the ethylene/1-butene copolymer is no greater than about 0.905 gram per cubic centimeter and is preferably in the range of about 0.88 to about 0.905 gram per cubic centimeter. The melt index is in the range of about 0.5 to about 10 grams per ten minutes. Melt index is determined in accordance with ASTM D-1238, Condition E, and is measured at 190° C. The density of the ethylene/1-hexene copolymer is no greater than about 0.920 gram per cubic centimeter and is preferably in the range of about 0.88 to about 0.920 gram per cubic centimeter. The melt index is in the range of about 0.5 to about 20 grams per ten minutes and is preferably in the range of about 0.5 to about 10 grams per ten minutes.

The silane grafted olefin copolymer can be prepared by the technique described below. In this copolymer, the portion attributed to the silane is present in an amount of about 0.5 percent to about 10 percent by weight based on the weight of the copolymer and is preferably incorporated into the copolymer in an amount of about 0.5 to about 4 percent by weight. The silane used to modify the copolymer can be, among others, a vinyl trialkoxy silane such as vinyl trimethoxy silane or vinyl triethoxy silane. Generally speaking, any unsaturated monomeric silane containing at least one hydrolyzable group can be used. If slower water cure or better shelf stability are desired, vinyl triisobutoxy silane, vinyl tris-(2-ethyl-hexoxy) silane or vinyl trisopropoxy silane can be used.

A free radical generator or catalyst is used in the preparation of the silane grafted polymer. Among the most useful free radical generators are dicumyl peroxide, lauroyl peroxide, azobisisobutyronitrile, benzoyl peroxide, tertiary butyl perbenzoate, di(tertiary-butyl) peroxide, cumene hydroperoxide, 2,5-dimethyl-2,5-di(t-butylperoxy) hexyne, 2,5-dimethyl-2,5-di(t-butylperoxy)hexane, tertiary butyl hydroperoxide, and isopropyl percarbonate. The organic peroxides are preferred. About 0.01 to about 5 percent by weight of free radical generator based on the weight of the copolymer is used, and preferably about 0.01 to about 0.1 percent by weight.

The organic peroxides are also used to cross-link or cure the ethylene/1-butene and ethylene/1-hexene copolymers. The hydrolyzable silane grafted copolymer can be cross-linked using an organic peroxide or with moisture in the presence of a conventional silanol condensation catalyst such as dibutyl tin dilaurate. The amount of organic peroxide used for cross-linking is in the range of about 0.5 to about 5 percent by weight based on the weight of the copolymer.

A typical procedure for preparing a silane grafted polyethylene follows: 100 parts of ethylene/1-butene copolymer having a density of 0.90, 0.2 part of polymerized 1,3-dihydro-2,2,4-trimethylquinoline (an antioxidant), 0.1 part of dicumyl peroxide, and 4 parts of vinyl tri-2-ethyl-hexoxy silane are mixed in a laboratory Brabender mixer at a temperature in the range of about 80°C to about 115°C, a temperature low enough to keep the dicumyl peroxide below its decomposition temperature. After mixing for five minutes, the temperature is raised to a temperature in the range of about 150°C to about 220°C. The batch is then mixed for 5 to 10 minutes during which grafting of the silane to the copolymer occurs. The antioxidant is used as a radical trap to control the amount of cross-linking. The foregoing technique can be repeated, for example, with 3 parts of vinyltriisobutyoxysilane and 0.1 part of the antioxidant, tetrakis[methylene (3-5-di-tert-butyl-4-hydroxyhydro-cinnamate)] methane; initial mixing is in the range of 110°C to 120°C; grafting is for five minutes at 185°C.

Various processes for preparing silane grafted polyethylene and ethylene/silane copolymers and numerous unsaturated silanes suitable for use in preparing these polymers and bearing hydrolyzable groups such as alkoxy, oxy aryl, oxyaliphatic, and halogen are mentioned in United States Patent Nos. 3,075,948; 3,225,018; 4,412,042; 4,413,066; 4,574,133; and 4,593,071.

Various conventional additives can be added in conventional amounts to the insulation compositions. Typical additives are antioxidants, ultraviolet absorbers, antistatic agents, pigments, slip agents, fire retardants, stabilizers, cross-linking agents, halogen scavengers, smoke inhibitors, cross-linking boosters, processing aids, lubricants, plasticizers, and viscosity control agents.

Subject composition is typically used in the form of an insulating layer coated on or extruded about an electrical conductor. The hydrolyzable composition is generally cross-linked after it is in place on the wire.

The patents, patent applications, and other publications mentioned in this specification are incorporated by reference herein.

The invention is illustrated by the following examples.

Examples 1 to 6

The resistance of insulating compositions to water treeing is determined by the method described in United States patent 4,144,202. This measurement leads to a value for water treeing resistance relative to a standard polyethylene insulating material. The term used for the value is "water tree growth rate" (WTGR). From experience in laboratory tests of materials and for accelerated tests of cables, it has been established that the value for WTGR should be equal to or less than about 10 percent of the standard to provide a useful improvement in cable performance, i.e., in the life of a cable which is in service and in contact with water during the period of service.

The compositions of examples 1 to 5 are based on ethylene/1-butene copolymers and prepared by a process similar to the typical procedure for titanium based catalysts, mentioned above. The composition of example 6 is based on ethylene/1-butene copolymers and prepared by a process similar to the typical procedure for vanadium based catalysts, mentioned above. The copolymers contain antioxidant, calcium stearate, and dicumyl peroxide as the cross-linking agent. All specimens are compression molded, cured, i.e., cross-linked, in the press, and vacuum treated for seven days at 80°C prior to testing. Variables and results are set forth below.

| Example[⁶] | 1 | 2 | 3 | 4 . | 5 | 6 |
|---|---|---|---|---|---|---|
| density (g/cc) | 0.88 | 0.89 | 0.90 | 0.905 | 0.918 | 0.90 |
| melt index | 1.5 | 1 | 5 | 1 | 1 | 0.25 |
| WTGR (%) | 2 | 1 | 2 | 7 | 17 | 10 |

Crosslinked ethylene/1-butene copolymers at 0.905 density and below meet the standard of WTGR of less than or equal to about 10 percent.

With respect to dielectric loss, specifications require that the maximum power factor of cables insulated with polymer containing no fillers, voltage stabilizers, or polar copolymers shall be 0.1 percent over the temperature and electrical stress range involved in cable testing. A plot of power factor against temperature for the copolymer of Example 3 shows the power factor to be below the 0.1 percent level over a temperature range of 22°C to 98°C.

Examples 7 to 9

In this example, the effect of density on WTGR of cross-linked ethylene/1-hexene copolymer produced using a catalyst prepared by a procedure similar to the typical procedure for titanium based catalysts, mentioned above. The test specimens are made as for examples 1 to 6, above. Density and WTGR are set forth below.

| Example | 7 | 8 | 9 |
|---|---|---|---|
| density (g/cc) | 0.912 | 0.917 | 0.918 |
| WTGR (%) | 1 | 6 | 3 |

Examples 10 to 17

In these examples, cross-linked blends of ethylene/1-butene copolymer (EB) or ethylene/1-hexene copolymer (EH) with high pressure polyethylene (HPPE) (melt index = 2; density = 0.922 g/cc) are shown to exhibit acceptable WTGR as long as the blend density, i.e., the average density of the blend, is preferably held below the maximum effective density for the copolymer component alone. The density of the ethylene/1-butene copolymer (EB) is 0.88 to 0.905 gram per cubic centimeter and the density of the ethylene/1-hexene copolymer (EH) is 0.88 to 0.920 gram per cubic centimeter. The test specimens are made as in examples 1 to 6 above.

Variables and results are set forth below.

| Example | 10 | 11 | 12 | 13 | 14 | 15 | 16 | 17 |
|---|---|---|---|---|---|---|---|---|
| average density of EB/HPPE blend (g/cc) | 0.893 | 0.903 | 0.908 | 0.913 | - | - | - | - |
| weight percent of EB (balance HPPE) | 75 | 75 | 75 | 50 | - | - | - | - |
| average density of EH/HPPE blend (g/cc) | - | - | - | - | 0.914 | 0.918 | 0.917 | 0.920 |
| weight percent of of EH (balance HPPE) | - | - | - | - | 50 | 25 | 50 | 25 |
| WTGR (%) | 2 | 2 | 20 | 35 | 7 | 29 | 6 | 11 |

Examples 18 to 21

5

In these examples, the effect of blending an ethylene/1-butene copolymer (EB) having a density of 0.89 gram per cubic centimeter with an ethylene/vinyl trimethoxy silane copolymer (ES) having a density of 0.921 gram per cubic centimeter is shown. The blends contain antioxidant and are cross-linked with an organic peroxide. Test specimens are made as in examples 1 to 6 above. Variables and results are shown below.

| Example | 18 | 19 | 20 | 21 |
|---|---|---|---|---|
| weight percent ES | 100 | 50 | 40 | 20 |
| weight percent EB of Example 5 | 0 | 50 | 60 | 80 |
| WTGR (%) | 15 | 9 | 6 | 1 |

The addition of ethylene/1-butene copolymer at the 50 percent or greater level provides a WTGR in the acceptable range.

Examples 22 and 23

It is known to add high pressure polyethylene to ethylene/propylene rubbers and ethylene/propylene/diene terpolymer rubbers (EPDM) to improve the processability so that the blends can be extruded without adding filler as a processing aid. The following examples show that the addition of an ethylene/1-butene copolymer (EB) having a density of 0.905 or less instead of high pressure polyethylene (HPPE) provides improved WTGR to the cross-linked blend. The test specimens are made as in examples 1 to 6 above.

The variables and result are set forth below.

| Example | 22 | 23 |
|---|---|---|
| weight % EPDM | 50 | 50 |
| weight % HPPE (melt index = 2; density = 0.922 g/cc) | 50 | 0 |
| weight % EB (melt index = 7; density = 0.90 g/cc) | 0 | 50 |
| WTGR (%) | 9 | <1 |

Examples 24 and 25

Vinyl trimethoxy silane is grafted to an ethylene/1-butene copolymer as described above. The silane grafted copolymer contains about 1.5 to 2 percent by weight silane. The density of the grafted copolymer, the melt index, and the WTGR are set forth below.

| Example | 24 | 25 |
|---|---|---|
| density (g/cc) | 0.88 | 0.89 |
| melt index | 1.7 | 1.0 |
| WTGR (%) | <1 | <1 |

# EP 0 341 644 A1

### Claims

1. A water tree resistant insulation composition comprising:

(a) an ethylene copolymer having a density of not greater than about 0.905 gram per cubic centimeter, produced by polymerizing a mixture of ethylene and 1-butene and, optionally, one or more other alpha-olefin comonomers in the presence of a polymerization catalyst; or

(b) an ethylene copolymer having a density of not greater than about 0.920 gram per cubic centimeter, produced by polymerizing a mixture of ethylene and 1-hexene and, optionally, one or more other alpha-olefin comonomers in the presence of a polymerization catalyst; or

(c) an ethylene copolymer according to paragraphs (a) or (b) grafted with a hydrolyzable vinyl silane compound; or

(d) a mixture of any two or more of the copolymers described in paragraphs (a), (b), and (c) in any proportion,

wherein said polymerization catalyst is comprised of

(A) magnesium, titanium, halogen, and an electron donor together with one or more aluminum containing compounds; or

(B) vanadium, halogen, and an electron donor together with one or more aluminum containing compounds and, optionally, a lower haloalkane compound,

said composition, optionally, blended with a polymer of (i) polyethylene having a density in the range of 0.91 to 0.93 gram per cubic centimeter; (ii) ethylene copolymers wherein at least one comonomer is a vinyl acid, a vinyl acid ester, a vinyl ester of an organic acid, or a derivative thereof; (iii) ethylene terpolymers based on at least two comonomers referred to in items (ii) and (viii); (iv) ethylene terpolymers based on alpha-olefins having 3 to 8 carbon atoms; (v) ethylene/propylene rubbers; (vi) ethylene/propylene/diene monomer rubbers; (vii) hydrolyzable graft polymers produced by grafting silane to any of items (i) to (vi); or (viii) ethylene/hydrolyzable silane copolymers.

2. The composition defined in claim 1 wherein the copolymer is an ethylene copolymer having a density of not greater than about 0.905 gram per cubic centimeter, produced by polymerizing a mixture of ethylene and 1-butene and, optionally one or more other alpha-olefin comonomers in the presence of a polymerization catalyst.

3. The composition defined in claim 1 or 2 wherein the copolymer is an ethylene copolymer having a density of not greater than about 0.920 g/cc, produced by polymerizing a mixture of ethylene and 1-hexene and, optionally, one or more other alpha-olefin comonomers in the presence of a polymerization catalyst.

4. The composition defined in any one of claims 1 to 3 wherein the copolymer is an ethylene copolymer according to paragraphs (a) or (b) grafted with a hydrolyzable vinyl silane compound.

5. The composition defined in any one of claims 1 to 4, paragraphs (a) or (b), additionally containing a monomeric unsaturated silane containing at least one hydrolyzable group and a free radical generator.

6. A water tree resistant composition comprising:

(a) a copolymer of at least the two comonomers, ethylene and 1-butene, said copolymer having a density no greater than about 0.905 gram per cubic centimeter; or

(b) a copolymer of at least the two comonomers, ethylene and 1-hexene, said copolymer having a density no greater than about 0.920 gram per cubic centimeter; or

(c) the copolymer of (a) or (b) grafted with a hydrolyzable vinyl silane,

the copolymers of (a) and (b) being produced by contacting the relevant comonomers, under polymerization conditions, with (i) a catalyst system containing a catalyst precursor comprising magnesium, titanium, a halogen, and an electron donor, and a hydrocarbyl aluminum cocatalyst or (ii) a catalyst system containing a catalyst precursor comprising vanadium, an electron donor, and a hydrocarbyl aluminum halide; a hydrocarbyl aluminum cocatalyst; and a halogen substituted lower alkane promoter.

7. The composition defined in claim 6 wherein the copolymers are cross-linked.

8. The compositions defined in claim 6 or 7 wherein the copolymer is a copolymer of at least the two comonomers, ethylene and 1-butene, said copolymer having a density no greater than about 0.905 gram per cubic centimeter.

9. The composition defined in claim 6 or 7 wherein the copolymer is a copolymer of at least the two comonomers, ethylene and 1-hexene, said copolymer having a density no greater than about 0.920 gram per cubic centimeter.

10. The composition defined in any one of claims 6 to 9 wherein the copolymer is grafted with a hydrolyzable vinyl silane.

11. The composition defined in any one of claims 6 to 10 wherein the density is no less than about 0.88 gram per cubic centimeter.

12. The composition defined in any one of claims 6 to 11 wherein the portion of the copolymer attributed to 1-butene or 1-hexene is in the range of about 5 to about 50 percent by weight based on the weight of the copolymer.

13. The composition defined in any one of claims 6 to 12 blended with a polymer of (i) polyethylene having a density in the range of 0.91 to 0.93 gram per cubic centimeter; (ii) ethylene copolymers wherein at least one comonomer is a vinyl acid, a vinyl acid ester, a vinyl ester of an organic acid, or a derivative thereof; (iii) ethylene terpolymers based on at least two comonomers referred to in items (ii) and (viii); (iv) ethylene terpolymers based on alpha-olefins having 3 to 8 carbon atoms; (v) ethylene/propylene rubbers; (vi) ethylene/propylene/diene monomer rubbers; (vii)hydrolyzable graft polymers produced by grafting silane to any of items (i) to (vi); or (viii) ethylene/hydrolyzable silane copolymers.

14. The composition defined in any one of claims 6 to 13 wherein the copolymer is based on at least one additional comonomer, said comonomer being an alpha-olefin having 3 to 12 carbon atoms or a diene having 5 to 25 carbon atoms, the portion of the copolymer based on the additional comonomer being no greater than about 15 percent by weight of the copolymer.

15. An electrical conductor coated with a cross-linked composition as defined in any one of claims 1 to 14.

16. The composition defined in any one of claims 1 to 14 prepared in the gas phase in a fluidized bed.

## DOCUMENTS CONSIDERED TO BE RELEVANT

EP 89108272.9

| Category | Citation of document with indication, where appropriate, of relevant passages | Relevant to claim | CLASSIFICATION OF THE APPLICATION (Int. Cl.4) |
|---|---|---|---|
| X;Y | JP - A2 - 63-88 707 (HITACHI) * Totality * | 1,2,4, 6-8, 10,12, 13,15; 3,9, 11,14, 16 | H 01 B 3/44 C 08 L 23/08 /C 08 F 210:16 |
| P | & Central Patent Index, Japanese Patents Abstracts Unexamined, Derwent, London JP-A-63 088 707, DW 8821 -- | | |
| Y,D | US - A - 4 302 565 (GOEKE et al.) * Claim 1; column 4, lines 44-68 * -- | 3,9, 11,14, 16 | |
| Y,D | EP - A1 - 0 120 501 (U.C.) * Claim 1; page 6, lines 9-13; page 11, lines 2-5; . examples 7,8,10,20-22 * ---- | 3,11, 16 | |

TECHNICAL FIELDS
SEARCHED (Int. Cl.4)

H 01 B 3/00
C 08 L 23/00
C 08 F

The present search report has been drawn up for all claims

| Place of search | Date of completion of the search | Examiner |
|---|---|---|
| VIENNA | 08-08-1989 | KUTZELNIGG |